# EUROPÄISCHE PATENTSCHRIFT

(11) **EP 2 942 130 B1**
(45) Veröffentlichungstag und Bekanntmachung des Hinweises auf die Patenterteilung: **30.01.2019**
(21) Anmeldenummer: 14167697.3
(22) Anmeldetag: 09.05.2014
(51) Int. Cl.: B22F 3/105, B29C 64/20, F01D 5/00, B29C 64/153, B33Y 10/00, B33Y 30/00, B22F 5/00

(54) **Vorrichtung und Verfahren zur generativen Herstellung zumindest eines Bauteilbereichs**
Apparatus and method for additive manufacturing of a device component
Appareil et procédé pour la fabrication additive d'au moins une partie de composant

(43) Veröffentlichungstag der Anmeldung: 11.11.2015
(73) Patentinhaber: MTU Aero Engines AG, 80995 München (DE)
(72) Erfinder: Heß, Thomas, 81541 München (DE); Ladewig, Alexander, 83707 Bad Wiessee (DE); Piorun, Steven, 80804 München (DE); Zenzinger, Günter, 83666 Waakirchen (DE)

(56) Entgegenhaltungen:
- EP-A1- 2 666 612
- EP-A2- 1 466 718
- WO-A2-2004/039531
- DE-A1-102011 009 624
- US-A1- 2002 104 973
- US-A1- 2003 202 095
- US-A1- 2009 303 507

## Beschreibung

Die Erfindung betrifft eine Vorrichtung sowie ein Verfahren zur generativen Herstellung zumindest eines Bauteilbereichs eines Bauteils, insbesondere eines Bauteils einer Turbine oder eines Verdichters.

Verfahren und Vorrichtungen zur Herstellung von Bauteilen sind in einer großen Vielzahl bekannt. Insbesondere sind generative Fertigungsverfahren (sog. Rapid Manufacturing- bzw. Rapid Prototyping-Verfahren) bekannt, bei denen das Bauteil durch pulverbettbasierte, additive Fertigungsverfahren schichtweise aufgebaut wird. Vorwiegend metallische Bauteile können beispielsweise durch Laser- bzw. Elektronenstrahlschmelz- oder -sinterverfahren hergestellt werden. Dabei wird zunächst schichtweise mindestens ein pulverförmiger Bauteilwerkstoff auf eine Bauteilplattform im Bereich einer Aufbau- und Fügezone der Vorrichtung aufgetragen. Anschließend wird der Bauteilwerkstoff schichtweise lokal verschmolzen und/oder versintert, indem dem Bauteilwerkstoff im Bereich der Aufbau- und Fügezone Energie mittels wenigstens eines Hochenergiestrahls, zum Beispiel eines Elektronen- oder Laserstrahls zugeführt wird. Der Hochenergiestrahl wird dabei in Abhängigkeit einer Schichtinformation der jeweils herzustellenden Bauteilschicht gesteuert. Nach dem Verschmelzen und/oder Versintern wird die Bauteilplattform schichtweise um eine vordefinierte Schichtdicke abgesenkt. Danach werden die genannten Schritte bis zur endgültigen Fertigstellung des Bauteils wiederholt.

Aus der US 2002/0104973 A1 ist eine Vorrichtung zum Oberflächenscannen für generative Fertigungsvorrichtungen bekannt, mit welcher die Höhe einer Bauteilschicht aktiv überwacht werden kann. Die gemessenen Höhendaten werden dann zur Regelung der selektiven Deponierung von pulverförmigem Bauteilwerkstoff verwendet.

Aus der WO 2004/039531 A2 ist ein alternatives System zur Überwachung eines Laserauftragschweißverfahrens bekannt. Das System umfasst mindestens drei, aus verschiedenen Blickwinkeln auf die Aufbau- und Fügezone gerichtete CCD-Detektoren, von denen jeweils zwei Aufnahmen der Schmelzzone zur Regelung verschiedener Verfahrensparameter erstellen.

Als nachteilig an den bekannten Vorrichtungen und Verfahren ist dabei der Umstand anzusehen, dass Aussagen über die Oberflächenbeschaffenheit bzw. Morphologie der einzelnen Bauteilschichten und damit eine genaue Ermittlung von etwaigen Fehlern im fertigen Bauteil nur eingeschränkt möglich ist. Insbesondere können Störungen während des Herstellungsverfahrens nur indirekt durch Schmelzbadüberwachung, Schwingungsanalyse des Pulverauftragmechanismus oder optische Tomographie detektiert werden. Eine direkte Oberflächenprüfung ist hingegen nur offline, das heißt mit Unterbrechung des Fertigungsprozesses möglich. Dies führt zu längeren Herstellungszeiten und entsprechend hohen Herstellungskosten.

Aufgabe der vorliegenden Erfindung ist es, eine Vorrichtung und ein Verfahren der eingangs genannten Art zu schaffen, die eine verbesserte Beurteilung der Oberflächenbeschaffenheit einzelner Bauteilschichten ermöglichen.

Die Aufgabe wird erfindungsgemäß durch eine Vorrichtung mit den Merkmalen des Patentanspruchs 1 zur generativen Herstellung zumindest eines Bauteilbereichs eines Bauteils, sowie durch ein entsprechendes Verfahren mit den Merkmalen des Patentanspruchs 8 gelöst. Vorteilhafte Ausgestaltungen mit zweckmäßigen Weiterbildungen der Erfindung sind in den jeweiligen Unteransprüchen angegeben, wobei vorteilhafte Ausgestaltungen der Vorrichtung als vorteilhafte Ausgestaltungen des Verfahrens und umgekehrt anzusehen sind.

Ein erster Aspekt der Erfindung betrifft eine Vorrichtung zur generativen Herstellung zumindest eines Bauteilbereichs eines Bauteils, insbesondere eines Bauteils einer Turbine oder eines Verdichters. Die Vorrichtung umfasst dabei mindestens eine Pulverzuführung zum Auftrag von mindestens einer Pulverschicht auf eine Aufbau- und Fügezone einer absenkbaren Bauteilplattform und mindestens eine Strahlungsquelle zum Erzeugen wenigstens eines Hochenergiestrahls, mittels welchem die Pulverschicht im Bereich der Aufbau- und Fügezone lokal zu einer Bauteilschicht verschmelzbar und/oder versinterbar ist. Erfindungsgemäß erlaubt die Vorrichtung eine verbesserte Beurteilung der Morphologie einer hergestellten Bauteilschicht, indem ein Kamerasystem vorgesehen ist, mittels welchem wenigstens eine stereoskopische Aufnahme zur dreidimensionalen Erfassung wenigstens eines Bereichs der Bauteilschicht erzeugbar ist, wobei das Kamerasystem als Streifenprojektionssystem ausgebildet ist. Die Erfindung beruht auf der Erkenntnis, dass Störungen im generativen Fertigungsprozess zu Veränderungen der Schmelzbadoberfläche und damit der späteren Bauteilschicht führen. Diese Veränderungen stehen im Verdacht, Ursache für Gefügefehler zu sein. Mit Hilfe des Kamerasystems kann nunmehr die Oberfläche jeder Bauteilschicht besonders schnell und präzise erfasst werden, wobei das Kamerasystem "Stereo-Aufnahmen", das heißt dreidimensionale Bildinformationen generiert, die eine besonders schnelle, einfache und genaue Prozesskontrolle ermöglichen. Mit Hilfe des als Streifenprojektionssystems ausgebildeten Kamerasystems können Bildsequenzen zur dreidimensionalen Erfassung der Oberflächenbeschaffenheit der Bauteilschicht erzeugt und verwendet werden. Bei dem als Streifenprojektionssystem ausgebildeten Kamerasystem wird die in der Herstellung begriffene oder bereits vollständig hergestellte Bauteilschicht zeitlich sequentiell mit Mustern von parallelen hellen und dunklen Streifen unterschiedlicher Breite beleuchtet. Die Kamera(s) des Kamerasystems registrieren das projizierte Streifenmuster unter einem bekannten Blickwinkel zur Projektion. Für jedes Projektionsmuster wird ein Bild aufgenommen, so dass für jeden Bildpunkt aller Kameras eine zeitliche Folge von unterschiedlichen Helligkeitswerten entsteht. Aus diesen Helligkeitswerten können dann die dreidimensionalen Koordinaten der Oberfläche der Bauteilschicht abgeleitet werden. Indem mehrere Aufnahmen einer einzelnen Bauteilschicht erzeugt werden kann das Signal-Rausch-Verhältnis vorteilhaft verbessert werden. Alternativ oder zusätzlich können auf diese Weise auch sehr große und/oder geometrisch anspruchsvolle Oberflächen zuverlässig ermittelt und beurteilt werden. Die erfindungsgemäße Vorrichtung eignet sich dabei insbesondere zur Herstellung von Bauteilen für Verdichter oder Turbinen von Gasturbinen, beispielsweise von Leit- oder Laufschaufeln von Flugtriebwerken.

In einer vorteilhaften Ausgestaltung der Erfindung ist vorgesehen, dass das Kamerasystem wenigstens zwei voneinander beabstandete Kameras umfasst. Mit anderen Worten weist das Kamerasystem mindestens zwei Kameras auf, die in einem konstanten oder variablen Abstand zueinander angeordnet sind und damit die bildliche Aufnahme einer räumlichen Szene ermöglichen. Aus dem räumlichen Versatz der wenigstens zwei Bilder kann eine 3D-Information ermittelt werden, die Aussagen über die Oberflächenbeschaffenheit der betreffenden Bauteilschicht erlaubt. Die so gewonnenen Tiefenkarten können sowohl für eine 3D-Auswertung als auch für eine Visualisierung der Bauteiloberfläche bzw. von ausgewählten Eigenschaften der der Bauteiloberfläche verwendet werden. Vorzugsweise sind die wenigstens zwei Kameras bzw. Bildsensoren achsparallel mit einem horizontalen Abstand zueinander angeordnet. Grundsätzlich können anstelle einer zweiten vollständigen Kamera auch ein die zweite Kamera ersetzendes optisches Hilfsmittel und/oder zwei in ein Kameragehäuse eingebaute Objektive mit zwei zugeordneten Bildsensoren bzw. Bildsensorbereichen vorgesehen sein.

In einer weiteren vorteilhaften Ausgestaltung der Erfindung ist vorgesehen, dass das Kamerasystem wenigstens einen Infrarot-Sensor umfasst. Hierdurch wird eine hohe Unabhängigkeit von den Umgebungslichtbedingungen erreicht, da die Oberflächen von generativ hergestellten Bauteilschichten aus metallischen Materialien üblicherweise stark reflektieren. Zusätzlich können neben Tiefen- bzw. Bildinformationen auch Wärmeinformationen der gebildeten Bauteilschicht bei der Beurteilung der Oberflächenbeschaffenheit berücksichtigt werden. Der Infrarot-Sensor kann als CMOS- und/oder sCMOS- und/oder CCD-Kamera(s) ausgebildet sein. Detektoren bzw. Kameras der genannten Bauarten sind in der Lage, die meisten erhältlichen CCD-Bildsensoren zu ersetzen. Im Vergleich zu den bisherigen Generationen von CCDbasierten Sensoren bzw. Kameras bieten Kameras auf Basis von CMOS und sCMOS-Sensoren verschiedene Vorteile wie beispielsweise ein sehr niedriges Ausleserauschen, eine hohe Bildrate, einen großen Dynamikbereich, eine hohe Quanteneffizienz, eine hohe Auflösung sowie eine große Sensorfläche. Dies ermöglicht eine besonders gute Qualitätsprüfung der hergestellten Bauteilschicht. Der Infrarot-Sensor kann darüber hinaus mit weiteren Sensoren bzw. Kameras kombiniert werden.

In einer weiteren vorteilhaften Ausgestaltung der Erfindung ist das Kamerasystem ortsfest und/oder beweglich gegenüber der Aufbau- und Fügezone angeordnet. Hierdurch kann das Kamerasystem in Abhängigkeit des jeweiligen Bauteils und/oder der konkreten Ausgestaltung der Vorrichtung optimal positioniert werden. Indem das Kamerasystem beweglich angeordnet ist, können zudem besonders einfach Bilder aus unterschiedlichen Blickwinkeln aufgenommen und zur Ermittlung und Beurteilung der Oberflächengeometrie der Bauteilschicht herangezogen werden.

Weitere Vorteile ergeben sich, indem dem Kamerasystem ein Beleuchtungssystem zugeordnet ist, mittels welchem zumindest ein Bereich der Bauteilschicht mit unterschiedlichen Beleuchtungswinkeln und/oder mit unterschiedlichen Wellenlängen und/oder Wellenlängenbereichen beleuchtbar ist. Da die Oberflächen von generativ hergestellten Bauteilschichten aus metallischen Materialien üblicherweise stark reflektieren, können in Abhängigkeit der jeweiligen Gegebenheiten durch mehrfache Belichtungen mit ortsfesten Kameras unter verschiedenen Beleuchtungswinkeln und/oder durch eine Beleuchtung mit zeitlich und/oder örtlich variierenden Wellenlängen bzw. Wellenlängenbereichen besonders präzise Ermittlung der Oberflächenbeschaffenheit der betreffenden Bauteilschicht sichergestellt werden.

Dabei hat es sich in weiterer Ausgestaltung der Erfindung als vorteilhaft gezeigt, wenn das Beleuchtungssystem wenigstens eine Infrarot-Lichtquelle, insbesondere einen IR-Laser, und/oder wenigstens eine Lichtquelle, mittels welcher zumindest die Bauteilschicht zeitlich sequentiell mit Streifen unterschiedlicher Breite beleuchtbar ist, umfasst. Dies ermöglicht ebenfalls eine besonders präzise Ermittlung der Oberflächenbeschaffenheit der betreffenden Bauteilschicht

Weitere Vorteile ergeben sich, indem das Kamerasystem mit einer Auswerteeinrichtung gekoppelt ist, wobei die Auswerteeinrichtung ausgebildet ist, anhand der wenigstens einen stereoskopischen Aufnahme des Kamerasystems eine Oberflächengüte der Bauteilschicht zu ermitteln. Vorzugsweise sind das Kamerasystem und die Auswerteeinrichtung ausgebildet, die Oberflächengüte bereits während der Herstellung der Bauteilschicht kontinuierlich zu ermitteln und zu überwachen, so dass bei auftretenden Abweichungen von einem Soll-Wert bereits während der Herstellung der einzelnen Bauteilschichten entsprechende Korrekturen vorgenommen werden können. Hierdurch werden aufwändige Nachbearbeitungen oder das Verwerfen von fehlerhaften Bauteilen vorteilhaft verringert oder sogar vollständig vermieden.

Ein zweiter Aspekt der Erfindung betrifft ein Verfahren zur Herstellung zumindest eines Bauteilbereichs eines Bauteils, insbesondere eines Bauteils einer Turbine oder eines Verdichters, wobei das Verfahren zumindest die Schritte schichtweises Auftragen von mindestens einem pulverförmigen Bauteilwerkstoff auf eine Bauteilplattform im Bereich einer Aufbau- und Fügezone, schichtweises und lokales Verschmelzen und/oder Versintern des Bauteilwerkstoffs durch Zuführen von Energie mittels wenigstens eines Hochenergiestrahls im Bereich der Aufbau- und Fügezone zum Ausbilden einer Bauteilschicht, schichtweises Absenken der Bauteilplattform um eine vordefinierte Schichtdicke und Wiederholen der Schritte a) bis c) bis zur Fertigstellung des Bauteilbereichs umfasst. Erfindungsgemäß erlaubt das Verfahren eine verbesserte Beurteilung der Morphologie einer hergestellten Bauteilschicht, indem mittels eines als Streifenprojektionssystem ausgebildeten Kamerasystems wenigstens eine stereoskopische Aufnahme zur dreidimensionalen Erfassung zumindest eines Bereichs der Bauteilschicht erzeugt wird. Bei dem als Streifenprojektionssystem ausgebildeten Kamerasystem wird die in der Herstellung begriffene oder bereits vollständig hergestellte Bauteilschicht zeitlich sequentiell mit Mustern von parallelen hellen und dunklen Streifen unterschiedlicher Breite beleuchtet. Die Kamera(s) des Kamerasystems registrieren das projizierte Streifenmuster unter einem bekannten Blickwinkel zur Projektion. Für jedes Projektionsmuster wird ein Bild aufgenommen, so dass für jeden Bildpunkt aller Kameras eine zeitliche Folge von unterschiedlichen Helligkeitswerten entsteht. Aus diesen Helligkeitswerten können dann die dreidimensionalen Koordinaten der Oberfläche der Bauteilschicht abgeleitet werden. Indem mehrere Aufnahmen einer einzelnen Bauteilschicht erzeugt werden kann das Signal-Rausch-Verhältnis vorteilhaft verbessert werden. Alternativ oder zusätzlich können auf diese Weise auch sehr große und/oder geometrisch anspruchsvolle Oberflächen zuverlässig ermittelt und beurteilt werden. Die sich hieraus ergebenden Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

In einer vorteilhaften Ausgestaltung der Erfindung ist vorgesehen, dass mittels des Kamerasystems wenigstens eine stereoskopische Aufnahme für mehrere und/oder für jede Bauteilschicht erzeugt wird. Dies erlaubt eine besonders zuverlässige Kontrolle des Gefüges des generativ hergestellten Bauteils.

Weitere Vorteile ergeben sich, indem anhand der wenigstens einen stereoskopischen Aufnahme eine Oberflächengüte der zugeordneten Bauteilschicht ermittelt wird. Mit anderen Worten ist es erfindungsgemäß vorgesehen, dass aus der ermittelten dreidimensionalen Tiefenkarte Rückschlüsse auf die Qualität der Oberfläche gezogen werden. Dies kann beispielsweise anhand von Abweichungen zwischen einem Soll- und einem Ist-Wert erfolgen. Des Weiteren besteht die Möglichkeit, dass anhand der wenigstens einen stereoskopischen Aufnahme in Abhängigkeit der ermittelten Topographie bzw. Morphologie des verschmolzenen und/oder versinterten Bauteilwerkstoffs die Energiezuführung über den wenigstens einen Hochenergiestrahl gesteuert wird.

Weitere Merkmale der Erfindung ergeben sich aus den Ansprüchen, dem Ausführungsbeispiel sowie anhand der Zeichnung. Die vorstehend in der Beschreibung genannten Merkmale und Merkmalskombinationen sowie die nachfolgend in dem Ausführungsbeispiel genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: eine Prinzipdarstellung eines Ausführungsbeispiels einer erfindungsgemäßen Vorrichtung zur Herstellung eines Bauteils; und
- Fig. 2: eine Prinzipdarstellung der Ermittlung von stereoskopischen Bildern.

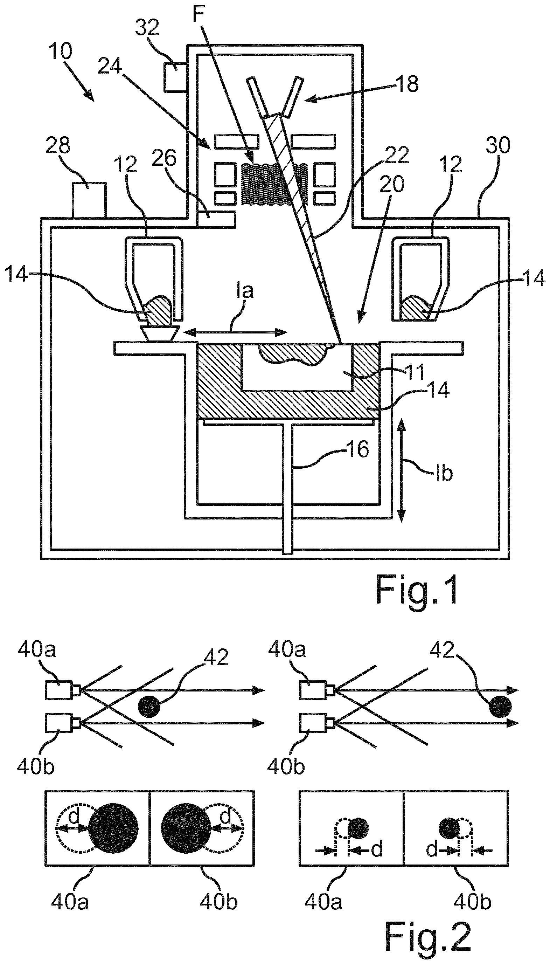

Fig. 1 zeigt eine Prinzipdarstellung eines Ausführungsbeispiels einer erfindungsgemäßen Vorrichtung 10 zur Herstellung eines Bauteils 11, welches vorliegend zur Verwendung in einer Strömungsmaschine vorgesehen ist. Gleiche oder funktionsgleiche Elemente sind dabei im Folgenden mit identischen Bezugszeichen versehen. Bei dem Bauteil 11 handelt es sich im gezeigten Ausführungsbeispiel um ein hohles Strukturbauteil einer Turbine. Die Vorrichtung 10 umfasst eine gemäß Doppelpfeil Ia bewegbare Pulverzuführung 12 zum Auftrag von mindestens einem pulverförmigen Bauteilwerkstoff 14 auf eine gemäß Doppelpfeil Ib bewegbare Bauteilplattform 16. Weiterhin umfasst die Vorrichtung 10 eine oder mehrere Strahlungsquellen 18, mittels welchen im Bereich einer Aufbau- und Fügezone 20 der Bauteilplattform 16 Laser- und/oder Elektronenstrahlen 22 für ein schichtweises und lokales Verschmelzen und/oder Versintern des Bauteilwerkstoffs 14 erzeugt werden. Zum Einstellen der räumlichen Ablenkung, der Fokussierung und der thermischen Leistung der Elektronenstrahlen 22 kann die Vorrichtung 10 bei Bedarf eine Einrichtung 24 zum Erzeugen von elektromagnetischen Feldern F aufweisen. Mittels der Einrichtung 24 können Elektronenstrahlen 22 einer als Elektronenquelle ausgebildeten Strahlungsquelle 18 - wie vorliegend gezeigt - zu einem Strahl vereinigt, voneinander getrennt oder in mehrere Elektronenstrahlen 22 aufgespalten werden. Falls ein oder mehrere Laser zum Erzeugen des oder der Hochenergiestrahlen 22 verwendet werden, ist eine solche Einrichtung 24 natürlich nicht erforderlich.

Zur Kontrolle des Herstellungsverfahrens weist die Vorrichtung 10 ein Kamerasystem 26 auf, mittels welchem stereoskopische Aufnahmen zur dreidimensionalen Erfassung der Bauteilschichten erzeugbar sind. Die Anordnung des Kamerasystems 26 ist dabei lediglich beispielhaft und kann grundsätzlich frei gewählt werden. Das Kamerasystem 26, welches grundsätzlich statisch oder beweglich ausgebildet sein kann, ist mit einer grundsätzlich optionalen Auswerteeinrichtung 28 gekoppelt, wobei die Auswerteeinrichtung 28 ausgebildet ist, anhand der stereoskopischen Aufnahmen des Kamerasystems 26 eine Oberflächengüte der einzelnen Bauteilschichten des Bauteils 11 zu ermitteln.

Durch das Stereo-Kamerasystem 26, welches vorliegend zwei hochauflösende Kameras 40a, 40b (s. Fig. 2) umfasst, kann eine präzise Vermessung der Oberfläche jeder Bauteilschicht realisiert werden. Das Messprinzip entspricht dabei demjenigen einer Streifenprojektion. Da die generativ hergestellten metallischen Oberflächen stark reflektieren, können verschiedene Maßnahmen vorgesehen sein. Beispielsweise kann wenigstens eine der Kameras 40a, 40b im Infrarot-Bereich (IR-Bereich) arbeiten. Alternativ oder zusätzlich können mehrfache Belichtungen einer Bauteilschicht mit ortsfesten Kameras 40a, 40b unter verschiedenen Beleuchtungswinkeln durchgeführt werden. Ebenso kann vorgesehen sein, dass die zu beurteilende Bauteilschicht mit wenigstens zwei Lichtquellen (nicht gezeigt) bestrahlt wird, wobei die Lichtquellen Licht unterschiedlicher Wellenlängenbereiche emittieren. Ebenso kann vorgesehen sein, dass ein ohnehin vorhandener Laser einer Strahlungsquelle 18 auch als Lichtquelle verwendet wird.

Um die Herstellung des Bauteils 11 sauerstofffrei durchführen zu können und um eine unerwünschte Ablenkung sowohl der Hochenergiestrahlen 22 zu vermeiden, kann die Vorrichtung 10 bedarfsweise eine Vakuumkammer 30 umfassen, innerhalb welcher während der Herstellung des Bauteils 11 ein Hochvakuum erzeugt wird.

Zur Steuern der Hochenergiestrahlen 22 sind die Strahlungsquelle 18, die Einrichtung 24 und die Auswerteeinrichtung 28 mit einer Steuer- und/oder Regeleinrichtung 32 gekoppelt, welche ausgelegt ist, die Strahlungsquelle 18 in Abhängigkeit einer Schichtinformation des herzustellenden Bauteils 11 und/oder in Abhängigkeit der ermittelten Oberflächenbeschaffenheit bzw. Oberflächengüte der einzelnen Bauteilschichten zu steuern bzw. zu regeln. Die Steuer- und/oder Regeleinrichtung 32 erlaubt somit eine schnelle und präzise Anpassung der Hochenergiestrahlen 22 an die Eigenschaften der jeweiligen Bauteilschicht.

Durch die Erfassung und Auswertung der Oberflächeneigenschaft mit Hilfe des Kamerasystems 26 steht eine "Online-Überwachung" des Herstellungsverfahrens zur Verfügung. Durch diese unmittelbare Kontrollmöglichkeit des Schmelz- und/oder Sintervorgangs ergibt sich eine hohe Baugeschwindigkeit bei gleichzeitig hoher Fertigungspräzision.

Anhand der Vorrichtung 10 wird im Folgenden die Herstellung des Bauteils 11 beschrieben werden. Zunächst wird der pulverförmige Bauteilwerkstoff 14 mit Hilfe der Pulverzuführung 12 schichtförmig auf der Bauteilplattform 16 im Bereich der Aufbau- und Fügezone 20 aufgetragen. Alternativ können auch mehrere unterschiedliche Bauteilwerkstoffe 14 aufgetragen werden, wobei jede Bauteilschicht gegebenenfalls unterschiedlich ausgebildet werden kann. Anschließend wird der Bauteilwerkstoff 14 schichtweise lokal Verschmolzen und/oder Versintert, indem über die Hochenergiestrahlen 22 Energie zugeführt wird. Die Energiezuführung über die Hochenergiestrahlen 22 wird in der vorstehend beschriebenen Weise in Abhängigkeit einer Schichtinformation des Bauteils 11 und/oder in Abhängigkeit der mit Hilfe des Kamerasystems 26 ermittelten Topographie bzw. Morphologie des verschmolzenen und/oder versinterten Bauteilwerkstoffs 14 gesteuert. Nach dem Verschmelzen und/oder Versintern wird die Bauteilplattform 16 um eine vordefinierte Schichtdicke abgesenkt. Die genannten Schritte werden dann bis zur Fertigstellung des Bauteils 11 wiederholt, wobei vorzugsweise jede Bauteilschicht mit Hilfe des Kamerasystems 26 photographiert und mit Hilfe der Auswerteeinrichtung 28 im Hinblick auf ihre Oberflächengüte beurteilt wird.

Fig. 2 zeigt eine Prinzipdarstellung der Ermittlung von stereoskopischen Bildern. Zur Rekonstruktion der Tiefeninformation werden wie bereits erwähnt wenigstens zwei Kameras 40a, 40b verwendet, die vorzugsweise achsparallel mit einem horizontalen Abstand (Basisweite b) zueinander angeordnet sind. Aus der zugehörigen Projektionsgeometrie und unter Anwendung des Strahlensatzes ergibt sich die sogenannte Disparität d als Verschiebung zwischen korrespondierenden Bildpunkten eines Objekts 42. Bei bekannten Kameraparametern ist die Disparität damit ein eindeutiges Maß für die Objektentfernung und kann zur Ermittlung einer Tiefenkarten für die 3D-Auswertung sowie bei Bedarf für eine Visualisierung der Oberfläche einzelner Bauteilschichten verwendet werden.

### Bezugszeichenliste:

- 10: Vorrichtung
- 11: Bauteil
- 12: Pulverzuführung
- 14: Bauteilwerkstoff
- 16: Bauteilplattform
- 18: Strahlungsquelle
- 20: Fügezone
- 22: Hochenergiestrahlen
- 24: Einrichtung
- 26: Kamerasystem
- 28: Auswerteeinrichtung
- 30: Vakuumkammer
- 32: Regeleinrichtung
- 40a: Kamera
- 40b: Kamera
- 42: Objekt

## Patentansprüche

1. Vorrichtung (10) zur generativen Herstellung zumindest eines Bauteilbereichs eines Bauteils (11), insbesondere eines Bauteils (11) einer Turbine oder eines Verdichters, umfassend:
- mindestens eine Pulverzuführung (12) zum Auftrag von mindestens einer Pulverschicht auf eine Aufbau- und Fügezone (20) einer absenkbaren Bauteilplattform (16); und
- mindestens eine Strahlungsquelle (18) zum Erzeugen wenigstens eines Hochenergiestrahls (22), mittels welchem die Pulverschicht im Bereich der Aufbau- und Fügezone (20) lokal zu einer Bauteilschicht verschmelzbar und/oder versinterbar ist;
wobei ein Kamerasystem (26) vorgesehen ist, mittels welchem wenigstens eine stereoskopische Aufnahme zur dreidimensionalen Erfassung wenigstens eines Bereichs der Bauteilschicht erzeugbar ist,
**dadurch gekennzeichnet, dass**
das Kamerasystem (26) als Streifenprojektionssystem ausgebildet ist.

2. Vorrichtung (10) nach Anspruch 1,
**dadurch gekennzeichnet, dass**
das Kamerasystem (26) wenigstens zwei voneinander beabstandete Kameras (40a, 40b) umfasst.

3. Vorrichtung (10) nach Anspruch 1 oder 2,
**dadurch gekennzeichnet, dass**
das Kamerasystem (26) wenigstens einen Infrarot-Sensor umfasst.

4. Vorrichtung (10) nach einem der Ansprüche 1 bis 3,
**dadurch gekennzeichnet, dass**
das Kamerasystem (26) ortsfest und/oder beweglich gegenüber der Aufbau- und Fügezone (20) angeordnet ist.

5. Vorrichtung (10) nach einem der Ansprüche 1 bis 4,
**dadurch gekennzeichnet, dass**
dem Kamerasystem (26) ein Beleuchtungssystem zugeordnet ist, mittels welchem zumindest ein Bereich der Bauteilschicht mit unterschiedlichen Beleuchtungswinkeln und/oder mit unterschiedlichen Wellenlängen und/oder Wellenlängenbereichen beleuchtbar ist.

6. Vorrichtung (10) nach Anspruch 5,
**dadurch gekennzeichnet, dass**
das Beleuchtungssystem wenigstens eine Infrarot-Lichtquelle, insbesondere einen IR-Laser, und/oder wenigstens eine Lichtquelle, mittels welcher zumindest die Bauteilschicht zeitlich sequentiell mit Streifen unterschiedlicher Breite beleuchtbar ist, umfasst.

7. Vorrichtung (10) nach einem der Ansprüche 1 bis 6,
**dadurch gekennzeichnet, dass**
das Kamerasystem (26) mit einer Auswerteeinrichtung (28) gekoppelt ist, wobei die Auswerteeinrichtung (28) ausgebildet ist, anhand der wenigstens einen stereoskopischen Aufnahme des Kamerasystems (26) eine Oberflächengüte der Bauteilschicht zu ermitteln.

8. Verfahren zur Herstellung zumindest eines Bauteilbereichs eines Bauteils (11), insbesondere eines Bauteils (11) einer Turbine oder eines Verdichters, folgende Schritte umfassend:
a) Schichtweises Auftragen von mindestens einem pulverförmigen Bauteilwerkstoff (14) auf eine Bauteilplattform (16) im Bereich einer Aufbau- und Fügezone (20);
b) Schichtweises und lokales Verschmelzen und/oder Versintern des Bauteilwerkstoffs (14) durch Zuführen von Energie mittels wenigstens eines Hochenergiestrahls (22) im Bereich der Aufbau- und Fügezone (20) zum Ausbilden einer Bauteilschicht;
c) Schichtweises Absenken der Bauteilplattform (16) um eine vordefinierte Schichtdicke; und
d) Wiederholen der Schritte a) bis c) bis zur Fertigstellung des Bauteilbereichs,
**dadurch gekennzeichnet, dass**
mittels eines als Streifenprojektionssystem ausgebildeten Kamerasystems (26) wenigstens eine stereoskopische Aufnahme zur dreidimensionalen Erfassung zumindest eines Bereichs der Bauteilschicht erzeugt wird.

9. Verfahren nach Anspruch 8,
**dadurch gekennzeichnet, dass**
mittels des Kamerasystems (26) wenigstens eine stereoskopische Aufnahme für mehrere und/oder jede Bauteilschicht erzeugt wird.

10. Verfahren nach Anspruch 8 oder 9,
**dadurch gekennzeichnet, dass**
anhand der wenigstens einen stereoskopischen Aufnahme eine Oberflächengüte der zugeordneten Bauteilschicht ermittelt wird.

11. Verfahren nach einem der Ansprüche 8 bis 10,
**dadurch gekennzeichnet, dass**
anhand der wenigstens einen stereoskopischen Aufnahme in Abhängigkeit der ermittelten Topographie bzw. Morphologie des verschmolzenen und/oder versinterten Bauteilwerkstoffs (14) die Energiezuführung über den wenigstens einen Hochenergiestrahl (22) gesteuert wird.

## Claims

1. Apparatus (10) for the additive manufacturing of at least one component region of a component (11), in particular a component (11) of a turbine or of a compressor, comprising:
- at least one powder supply (12) for applying at least one powder layer to a construction and joining zone (20) of a lowerable component platform (16); and
- at least one radiation source (18) for generating at least one high-energy beam (22), by means of which the powder layer can be melted and/or sintered locally with respect to a component layer in the region of the construction and joining zone (20), a camera system (26) being provided, by means of which at least one stereoscopic image for three-dimensionally capturing at least one region of the component layer can be generated, **characterized in that** the camera system (26) is designed as a strip projection system.

2. Apparatus (10) according to claim 1, **characterized in that** the camera system (26) comprises at least two mutually spaced-apart cameras (40a, 40b).

3. Apparatus (10) according to either claim 1 or claim 2, **characterized in that** the camera system (26) comprises at least one infrared sensor.

4. Apparatus (10) according to any of claims 1 to 3, **characterized in that** the camera system (26) is arranged so as to be in a fixed position and/or movable relative to the construction and joining zone (20).

5. Apparatus (10) according to any of claims 1 to 4, **characterized in that** a lighting system is associated with the camera system (26), by means of which lighting system at least one region of the component layer can be lit at various lighting angles and/or at various wavelengths and/or wavelength ranges.

6. Apparatus (10) according to claim 5, **characterized in that** the lighting system comprises at least one infrared light source, in particular an infrared laser, and/or at least one light source by means of which at least the component layer can be lit sequentially in time with strips of different widths.

7. Apparatus (10) according to any of claims 1 to 6, **characterized in that** the camera system (26) is coupled to an evaluation device (28), the evaluation device (28) being designed to determine a surface finish of the component layer using the at least one stereoscopic image of the camera system (26).

8. Method for manufacturing at least one component region of a component (11), in particular a component (11) of a turbine or of a compressor, the method comprising the following steps:
a) layer-by-layer application of at least one powdered component material (14) onto a component platform (16) in the region of a construction and joining zone (20);
b) layer-by-layer and local melting and/or sintering of the component material (14) by supplying energy by means of at least one high-energy beam (22) in the region of the construction and joining zone (20) in order to form a component layer;
c) layer-by-layer lowering of the component platform (16) by a predefined layer thickness; and
d) repeating steps a) to c) until the component region is completed,
**characterized in that** at least one stereoscopic image for three-dimensionally capturing at least one region of the component layer is generated by means of a camera system (26) designed as a strip projection system.

9. Method according to claim 8, **characterized in that** at least one stereoscopic image is generated for a plurality of component layers and/or each component layer by means of the camera system (26).

10. Method according to either claim 8 or claim 9, **characterized in that** a surface finish of the associated component layer is determined using the at least one stereoscopic image.

11. Method according to any of claims 8 to 10, **characterized in that** the energy supply by means of the at least one high-energy beam (22) is controlled depending on the determined topography or morphology of the melted and/or sintered component material (14) using the at least one stereoscopic image.

## Revendications

1. Dispositif (10) pour la fabrication générative d'au moins une section de composant d'un composant (11), en particulier d'un composant (11) d'une turbine ou d'un compresseur, comprenant:
- au moins une alimentation en poudre (12) pour l'application d'au moins une couche de poudre sur une zone de construction et d'assemblage (20) d'une plateforme de composant (16) abaissable ; et
- au moins une source de rayonnement (18) pour la génération d'au moins un faisceau de haute énergie (22) au moyen duquel la couche de poudre au niveau de la zone de construction et d'assemblage (20) peut être fondue ou frittée en une couche de composant;
un système de caméras (26) étant prévu, au moyen duquel au moins un enregistrement stéréoscopique peut être généré pour la saisie tridimensionnelle d'une section de la couche de composant,
**caractérisé en ce que**
le système de caméras (26) est conçu comme un système de projection de franges.

2. Dispositif (10) selon la revendication 1,
**caractérisé en ce que**
le système de caméras (26) comprend au moins deux caméras (40a, 40b) espacées l'une de l'autre.

3. Dispositif (10) selon la revendication 1 ou 2,
**caractérisé en ce que**
le système de caméras (26) comprend au moins un capteur infrarouge.

4. Dispositif (10) selon l'une quelconque des revendications 1 à 3,
**caractérisé en ce que**
le système de caméras (26) est disposé fixement et/ou de façon mobile par rapport à la zone de construction et d'assemblage (20).

5. Dispositif (10) selon l'une quelconque des revendications 1 à 4,
**caractérisé en ce**
**qu'**un système d'éclairage est associé au système de caméras (26), au moyen duquel au moins une section de la couche de composant peut être éclairée sous différents angles d'éclairage ou avec différentes longueurs d'onde et/ou plages de longueur d'onde.

6. Dispositif (10) selon la revendication 5,
**caractérisé en ce que**
le système d'éclairage comprend au moins une source de lumière infrarouge, en particulier un laser IR, et/ou au moins une source de lumière, au moyen desquelles au moins la couche de composant peut être éclairée séquentiellement par des bandes de différentes largeurs.

7. Dispositif (10) selon l'une quelconque des revendications 1 à 6,
**caractérisé en ce que**
le système de caméras (26) est couplé à un dispositif d'évaluation (28), le dispositif d'évaluation (28) étant conçu pour déterminer une qualité de surface de la couche de composant au moyen de l'au moins un enregistrement stéréoscopique du système de caméras (26).

8. Procédé pour la fabrication d'au moins une section de composant d'un composant (11), en particulier d'un composant (11) d'une turbine ou d'un compresseur, comprenant les étapes suivantes :
a) l'application par couche d'au moins un matériau de composant en forme de poudre (14) sur une plateforme de composant (16) dans la section d'une zone de construction et d'assemblage (20) ;
b) la fusion et/ou le frittage local et par couche du matériau de composant (14) par la fourniture d'énergie au moyen d'au moins un faisceau de haute énergie (22) dans la section de la zone de construction et d'assemblage (20) pour la formation d'une couche de composant ;
c) un abaissement par couche de la plateforme de composant (16) d'une épaisseur de couche prédéfinie ; et
d) la répétition des étapes a) à c) jusqu'à la finition de la section de composant,
**caractérisé en ce**
**qu'**au moins un enregistrement stéréoscopique est généré au moyen d'un système de caméras (26) réalisé sous la forme d'un système de projection de franges pour la saisie tridimensionnelle d'au moins une section de la couche de composant.

9. Procédé selon la revendication 8,
**caractérisé en ce**
**qu'**au moins un enregistrement stéréoscopique est généré au moyen du système de caméras (26) pour plusieurs et/ou pour chacune des couches de composant.

10. Procédé selon la revendication 8 ou 9,
**caractérisé en ce**
**qu'**une qualité de surface de la couche de composant associée est déterminée au moyen d'au moins un enregistrement stéréoscopique.

11. Procédé selon l'une quelconque des revendications 8 à 10,
**caractérisé en ce que**
l'apport en énergie à travers l'au moins un faisceau de haute énergie (22) est contrôlé au moyen de l'au moins un enregistrement stéréoscopique, en fonction de la topographie ou morphologie déterminée du matériau de composant (14) fondu et/ou fritté.
